# EUROPÄISCHE PATENTANMELDUNG

(11) **EP 1 424 434 A1**
(43) Veröffentlichungstag der Anmeldung: **02.06.2004**
(21) Anmeldenummer: 03025874.3
(22) Anmeldetag: 12.11.2003
(51) Int. Cl.: D21B 1/32, D21B 1/34

(54) **Verfahren zur Herstellung einer wässrigen Suspension aus faserhaltigem Material**

(30) Priorität: 27.11.2002 DE 10255314
(71) Anmelder: Voith Paper Patent GmbH, 89522 Heidenheim (DE)
(72) Erfinder: Krebs, Jochen, 88213 Ravensburg (DE); Messmer, Peter, 88284 Mochenwangen (DE)

(57) **Zusammenfassung**

Das Verfahren dient zur Herstellung einer wässrigen Suspension z.B. aus Altpapier. Dabei wird zunächst eine Auflöseapparatur (1) verwendet, die vorzugsweise mit einer Konsistenz zwischen 12 und 22 % arbeitet. Die so hergestellte dickflüssige Suspension (S) fließt ohne weitere Verdünnung aus der Auflöseapparatur (1) ab und wird erst danach so weit verdünnt, dass sie mit Hilfe einer Mittel- oder Hochkonsistenzpumpe (2) weiter gefördert werden kann. Der Vorteil liegt z.B. darin, dass die der Auflöseapparatur (1) nachfolgenden Vorrichtungen kleiner gehalten werden können, da die Suspension in einer höheren Konsistenz vorliegt.

## Beschreibung

Die Erfindung bezieht sich auf ein Verfahren gemäß dem Oberbegriff des Anspruchs 1.

Bei der Herstellung von Papier ist es bekanntlich eine Grundvoraussetzung, dass die dazu benötigten Rohstoffe, insbesondere die Papier- oder Zellstofffasern in eine wässrige Suspension gebracht werden. Hierzu wird zunächst eine Auflöseapparatur verwendet, in der das Material mit dem Wasser vermischt wird und gleichzeitig so weit zerkleinert (aufgelöst), dass sich eine mehr öder weniger zähflüssige Suspension bildet. Bei Verfahren der hier genannten Art wird bei der beschriebenen Auflösung eine Konsistenz zwischen 10 und 25 % eingestellt. Welche Konsistenz aus diesem Bereich ausgewählt wird, hängt von den verschiedenen Bedingungen (Zusammensetzung des Materials, Verschmutzung des Materials, wirtschaftliche Aspekte) ab. Man spricht bei dem angegebenen Konsistenzbereich von Hochkonsistenzauflösung, die sich in vielem von der Mittel- und Niedrigkonsistenzauflösung unterscheidet. Als Auflöseapparaturen sind z.B. Stofflöser bekannt, die in der Regel einen offenen Auflösebehälter aufweisen, in dem sich ein angetriebenes Auflöseorgan befindet, das zur Zerkleinerung und Vermischung des hochkonsistenten Faserstoffbreis dient. Eine andere Möglichkeit ist eine Auflösetrommel, wie sie z.B. aus der DE 197 36 143 A1 bekannt ist.

Die auf diese Weise hergestellte zähflüssige Suspension, oft auch Faserstoffbrei genannt, kann in dieser Form in der Regel nicht gepumpt werden, weshalb bisher in den meisten Fällen zunächst eine Verdünnung erfolgt. Wegen der dabei auftretenden großen Volumenzunahme des Faserstoffbreis sind die Apparaturen entsprechend groß auszuführen, was mit erhöhten Kosten und erhöhtem Platzbedarf verbunden ist.

Der Erfindung liegt daher die Aufgabe zu Grunde, das Verfahren der genannten Art so zu verbessern, dass die Weiterverarbeitung des hochkonsistenten aufgelösten Faserstoffes besonders einfach und wirtschaftlich erfolgen kann.

Diese Aufgabe wird durch die Merkmale des Anspruchs 1 bereits vollständig gelöst.

Der Einsatz von Mittel- und Hochkonsistenzpumpen bei zähflüssigen breiartigen Faserstoffen ist an sich bekannt. Sie arbeiten ebenso wie Niedrigkonsistenzpumpen nach dem Prinzip der Kreiselpumpen. Anders als die üblichen Niedrigkonsistenzpumpen, deren Funktion nur bis zu einer Konsistenz von etwa 6 % gesichert ist, haben Mittelund Hochkonsistenzpumpen eine spezielle Ausgestaltung von Laufrad und Gehäuse, die den Arbeitsbereich zu wesentlich höheren Konsistenzen erweitern. Die wichtigsten Maßnahmen sind dabei die Stoffentlüftung im Pumpengehäuse und/oder spezielle Veränderungen am Laufrad, um den Faserstoff durch Scherkräfte zu fluidisieren. Mittelkonsistenzpumpen sind z.B. in der DE 40 06 604 A1 beschrieben.

Eine spezielle Mittelkonsistenzpumpe, die vorzugsweise bei einer Konsistenz zwischen 8 und 12 % eingesetzt werden soll, ist aus der US 4,619,736 bekannt. Diese kann direkt nach einem Hochkonsistenzstofflöser arbeiten. Sie ist mit einem Siebkorb versehen, der Schmutz und unaufgelöstes Papier abhält und über eine Schmutzöffnung ausleitet. Das soll Betriebsstörungen und Beschädigungen der Pumpe verhindern. Mit dem Siebkorb wirken sowohl ein Auflöserotor als auch bewegte Zerfaserungselemente zusammen. Das beschriebene Verfahren ist aufwändig, sowohl was die Apparaturen betrifft als auch die Betriebsweise.

Pumpen, die auch bei mehr als 15 % Konsistenz arbeiten können, werden oft als Hochkonsistenzpumpen bezeichnet. Eine solche ist aus der EP 0 297 464 A2 bekannt.

Anzumerken ist, dass der Bereich der "Hochkonsistenz" bei der Auflösung weiter geht als beim Pumpen. So ist es z.B. möglich, bei 25 % eine Hochkonsistenzauflösung durchzuführen, während Hochkonsistenzpumpen, die als Kreiselpumpen gebaut sind, dann oft nicht mehr funktionieren. Die Grenzen hängen aber nicht nur von der Konsistenz, sondern auch von der Zusammensetzung des Stoffes (Aschegehalt, Mahlgrad etc.) ab.

Mit Hilfe des erfindungsgemäßen Verfahrens ist es möglich, die aufgelöste Faserstoffsuspension möglichst lange in möglichst hoher Konsistenz zu erhalten, was insbesondere beim Fördern und Stapeln Vorteile bringt, da die Volumina noch relativ klein gehalten werden können. Es ist zwar nicht auszuschließen, dass im weiteren Verlauf der Aufbereitung doch noch eine Verdünnung auf niedrigere Werte notwendig ist, z.B. um in Hydrozyklonen oder Flotationsanlagen optimale Bedingungen zu erhalten, dennoch ist zu Beginn des Aufbereitungsverfahrens mit deutlichen ökonomischen Vorteilen zu rechnen. Bekanntlich ist insbesondere bei der Verdünnung des hochkonsistenten Faserstoffs im Stofflöser bzw. im Ableerbehälter einer Auflösetrommel mit sehr großen Apparaten zu rechnen. Hinzu kommt, dass der Einsatz von modernen Mittel- oder Hochkonsistenzpumpen durch das erfindungsgemäße Verfahren besonders günstig angewandt wird.

Unabhängig von den genannten apparativ bedingten ökonomischen Vorteilen kann mit Hilfe des Verfahrens auch die Technologie der Aufbereitung in diesem frühen Stadium verbessert werden. Es ist nämlich ohne weiteres denkbar, dass die Mittel- oder Hochkonsistenzpumpen bei entsprechend günstigen Bedingungen auch einen Beitrag zur weiteren Auflösung oder Entstippung des Papierfaserstoffes leisten kann. Das gilt insbesondere dann, wenn diese Pumpe mit einem rotierenden Fluidisierungselement versehen ist, das den Papierfaserstoff mit Hilfe von Scherkräften fluidisiert und damit leichter pumpbar macht.

Eine besonders günstige Anwendung des erfindungsgemäßen Verfahrens ergibt sich bei der Aufbereitung von Papiermaschinenausschuss. Bekanntlich fällt durch Störungen oder Produktumstellungen der Papierproduktion immer wieder eine beträchtliche Menge von halbfertigem Papier an. Diese sollte möglichst schnell aufbereitet und in den Produktionsprozess zurückgeführt werden können. Auch hierzu werden in vielen Fällen Hochkonsistenzauflöseverfahren bevorzugt, welche wenig Platz brauchen und auch bei kleinen Apparaturen einen hohen Durchsatz ermöglichen. Zumeist kann diese Auflösung auch im Batchbetrieb durchgeführt werden, wozu sich die Hochkonsistenzauflösung besonders gut eignet. Da der Ausschuss fast immer völlig frei von Schwerteilen ist, kann die Mittel- oder Hochkonsistenzpumpe direkt nach der Auflösung benutzt werden, ohne dass zur Entfernung der Schwerteile eine niedrigkonsistente Trennstufe benötigt würde.

Grundsätzlich ist aber das Verfahren auch bei der Aufbereitung von Altpapier anzuwenden, sofern dieses nicht allzu sehr mit Grobschmutz verunreinigt ist.

Die Erfindung und ihre Vorteile werden erläutert an Hand von Zeichnungen. Dabei zeigt:
- Fig. 1: eine Ausführungsform des Verfahrens;
- Fig. 2: eine Variante.

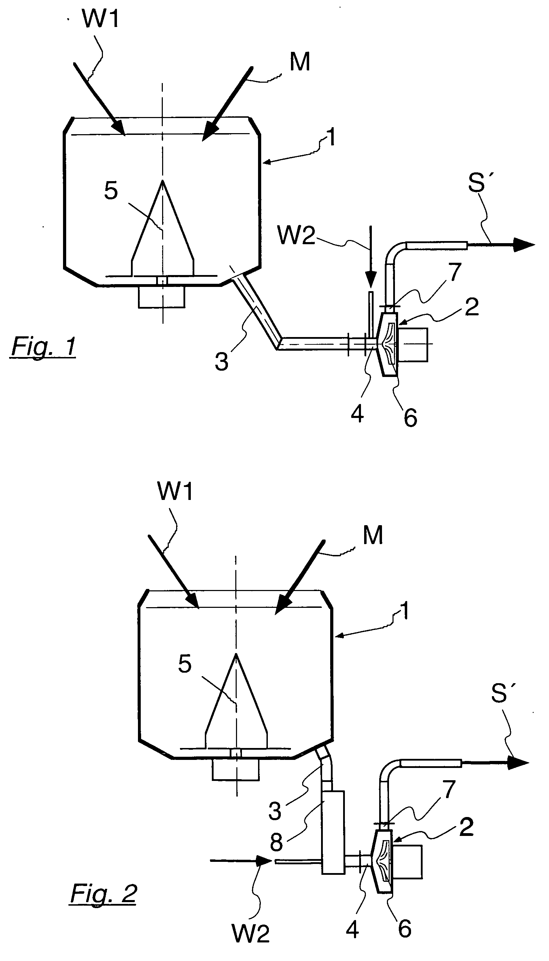

Fig. 1 zeigt eine schematische Darstellung der Auflöseapparatur 1 und der Mittelkonsistenzpumpe 2. Dazwischen befindet sich eine Verbindungsleitung 3. In die Auflöseapparatur 1, für die hier beispielsweise ein oben offener Stofflöser gewählt ist, wird das faserhaltige Material M zusammen mit dem Wasser W1 eingetragen und in der an sich bekannten Weise aufgelöst. Dabei wird so viel Wasser W1 zugegeben, dass sich eine Konsistenz zwischen 10 und 25 % einstellt. Vorzugsweise wird in so einem Hochkonsistenzstofflöser zwischen 12 und 18 % aufgelöst. Für den dazu benötigten Umtrieb und um das Material M zu zerkleinern, wird ein Hochkonsistenzrotor 5 in Rotation versetzt. Die sich bei der Auflösung bildende zähflüssige Suspension S gelangt anschließend über die Verbindungsleitung 3 in den zentralen Einlaufstutzen 4 der Mittelkonsistenzpumpe 2. Der Auflösevorgang wird vorzugsweise diskontinuierlich durchgeführt, d.h. eine Charge des Materials M wird nach ihrer Auflösung aus der Auflöseapparatur 1 entfernt, bevor eine neue Charge eingetragen wird. Das Verdünnungswasser W2, das erforderlich ist, um die Suspension S auf eine Stoffdichte zwischen 6 und 12 % zu bringen, wird spätestens dann zugegeben, wenn die dickflüssige Suspension S das Laufrad 6 der Mittelkonsistenzpumpe 2 erreicht hat. Bei dem hier gezeigten Beispiel erfolgt die Zugabe direkt in den Einlaufstutzen 4 der Mittelkonsistenzpumpe 2. Eine andere Möglichkeit wäre die Zugabe in die Verbindungsleitung 3. Die verdünnte Suspension S' veriässt die Mittelkonsistenzpumpe 2 am Druckstutzen 7 und wird weiter aufbereitet, so dass sie z.B. zur Papierfabrikation verwendet werden kann. In vielen Fällen wird einer Mittelkonsistenzpumpe ein senkrecht stehendes Vordruckstaurohr 8 vorgeschaltet, wie es in der Fig. 2 angedeutet ist. Dadurch wird die Stoffzufuhr in den Einlaufstutzen 4 verbessert. Die Zufuhr des Verdünnungswassers W2 erfolgt mit Vorteil in den unteren Teil des Vordruckstaurohrs 8.

## Patentansprüche

1. Verfahren zur Herstellung einer wässrigen Suspension aus faserhaltigem Material (M), insbesondere Zellstoff oder Altpapier, welches zunächst in einer Auflöseapparatur (1) bei einer Konsistenz zwischen 10 und 25 %, vorzugsweise 12 und 22 %, mit Wasser (W) vermischt und zu einer dickflüssigen Suspension (S) aufgelöst wird,
**dadurch gekennzeichnet,**
**dass** die dickflüssige Suspension (S) ohne weitere Verdünnung aus der Auflöseapparatur (1) entfernt und dann in eine Mittel- oder Hochkonsistenzpumpe (2) geleitet wird,
**dass** zwischen Auflöseapparatur (1) und der Mittel- oder Hochkonsistenzpumpe (2) kein Sieb verwendet wird und
**dass** die Suspension (S) auf dem Weg zwischen Auflöseapparatur (1) und dem Pumpenlaufrad der Mittel- oder Hochkonsistenzpumpe (2) auf eine Konsistenz verdünnt wird, bei der die Mittel- oder Hochkonsistenzpumpe (2) funktionsfähig ist.

2. Verfahren nach Anspruch 1,
**dadurch gekennzeichnet,**
**dass** eine Mittelkonsistenzpumpe (2) mit einer Konsistenz zwischen 6 und 15 %, vorzugsweise zwischen 8 und 12%, betrieben wird.

3. Verfahren nach Anspruch 1,
**dadurch gekennzeichnet,**
**dass** eine Hochkonsistenzpumpe (2) mit einer Konsistenz zwischen 15 und 20 % betrieben wird.

4. Verfahren nach Anspruch 1, 2 oder 3,
**dadurch gekennzeichnet,**
**dass** die Verdünnung im Einlaufstutzen (4) der Mittel- bzw. Hochkonsistenzpumpe (2) vorgenommen wird.

5. Verfahren nach Anspruch 1, 2 oder 3,
**dadurch gekennzeichnet,**
**dass** die Verdünnung in der Verbindungsleitung (3) zwischen Auflöseapparatur (1) und Mittel- bzw. Hochkonsistenzpumpe (2) vorgenommen wird.

6. Verfahren nach Anspruch 1, 2, 3, 4 oder 5,
**dadurch gekennzeichnet,**
**dass** der Mittel- bzw. Hochkonsistenzpumpe (2) ein Vordruckstaurohr (8) vorgeschaltet ist.

7. Verfahren nach einem der voranstehenden Ansprüche,
**dadurch gekennzeichnet,**
**dass** die Auflöseapparatur (1) ein Hochkonsistenzstofflöser ist.

8. Verfahren nach einem der Ansprüche 1 bis 6,
**dadurch gekennzeichnet,**
**dass** die Auflöseapparatur (1) eine Auflösetrommel ist.

9. Verfahren nach einem der voranstehenden Ansprüche,
**dadurch gekennzeichnet,**
**dass** zwischen der Auflöseapparatur (1) und der Mittel- oder Hochkonsistenzpumpe keine Zyklonvorrichtung verwendet wird.

10. Verfahren nach einem der voranstehenden Ansprüche,
**dadurch gekennzeichnet,**
**dass** die Auflöseapparatur (1) diskontinuierlich betrieben wird.

11. Verfahren nach einem der voranstehenden Ansprüche,
**dadurch gekennzeichnet,**
**dass** das faserhaltige Material (M) aus Papiermaschinenausschuss besteht.
